# EUROPEAN PATENT SPECIFICATION

(11) **EP 0 380 055 B1**
(45) Date of publication and mention of the grant of the patent: **07.01.1993**
(21) Application number: 90101307.8
(22) Date of filing: 23.01.1990
(51) Int. Cl.: B02C 4/08, B02C 4/30, A23N 5/00

(54) **Nut grinding machine**
Nussmühle
Appareil pour triturer des noix

(30) Priority: 25.01.1989 IT 6704189
(43) Date of publication of application: 01.08.1990
(73) Proprietor: Ferro, Sergio, I-12100 Cuneo (IT)
(72) Inventor: Ferro, Sergio, I-12100 Cuneo (IT)
(74) Representative: Spandonari, Carlo, Dr. Ing.

(56) References cited:
- DE-C- 8 991
- DE-C- 86 648
- FR-A- 1 147 882
- FR-A- 2 569 539
- US-A- 1 421 560

## Description

This invention is concerned with a grinding machine for roasted hazelnuts, almonds, chocolate in blocks or bars, and generally for roasted nuts, for use in the confectionery industry.

Hazelnuts and almonds, and sometimes other types of nuts, either raw or roasted, are widely used in the confectionary industry, often as chips mixed with chocolate paste or other sweet paste. For their grinding it is usual to employ a rotary-blade, centrifugal mixer, which breaks the nuts by hurling them against the wall of the container. This type of grinding produces chips of widely variable gauge, varying from powdery particles to chips of considerable size, although in most cases it is desired to have as uniform a grain as possible. Moreover, the centrifugal mixer tends to overheat the product being processed, due to the repeated, high-speed collisions to which the product undergoes. This is harmful for the organoleptic properties of the product. Often the processing even causes separation of an oleous phase.

In the production of chocolate paste the problem also arises of grinding the pellets or blocks of hard chocolate constituting the raw material. The processing, after a preliminary rough splitting of the blocks, is usually made by several runs in a three-cylinder mixer, as known in the art, but in this case, too, the product is mishandled or squeezed, due to the widely variable size of the chips, which is harmful to its organoleptic properties.

A nut grinding machine is known in accordance with the prior art portion of claim 1 (DE-C-8991).

The object of the invention is to provide a grinding machine for hazelnuts, almonds, chocolate in pellets or bars, and generally roasted nuts, for use in the confectionary industry, which yields chips of a uniform size, without uselessly overheating or mishandling the product, and therefore conserving its organoleptic properties, particularly without causing oil separation.

Another object is to provide such a machine so that it is self-priming and self-cleaning.

The invention achieves the above objects, as well as other objects and advantages which will appear from the following disclosure, with a nut grinding machine, in particular for hazelnuts, almonds and chocolate in bars, as claimed in claim 1.

Preferred features of the present invention are set out in the dependent claims.

The invention will now be described in more detail, with reference to a preferred embodiment, shown in the attached drawings, given by way of nonlimiting illustration, and wherein:
Fig. 1 is a view in lateral elevation, partly broken away, of a grinding machine according to the preferred embodiment of the invention;
Fig. 2 is a detail plan view, to an enlarged scale, of a grinding mechanism which is part of the machine of Fig. 1;
Fig. 3 is a partial view in transverse cross-section, made along line III-III of Fig. 2; and
Fig. 4 is a detail view, on an enlarged scale, of an extractor comb which is part of the machine of Fig. 1.

With reference to the Figures, the grinding machine according to the preferred embodiment comprises a bedplate 10 carrying two vertical parallel plates 12, 14, having respective pairs of aligned bores for rotatingly supporting two rollers 16, 18, which therefore are also parallel to each other. The rollers have annular ribs 20, 22 on their lateral surfaces, which are all of equal width and height, and with sharp corners. The intervals between adjacent ribs, in a direction longitudinal to the rollers, are equal to each other and equal to the width of one rib. A set of grooves 24, 26, complementary to ribs 20, 22, are therefore defined on each roller.

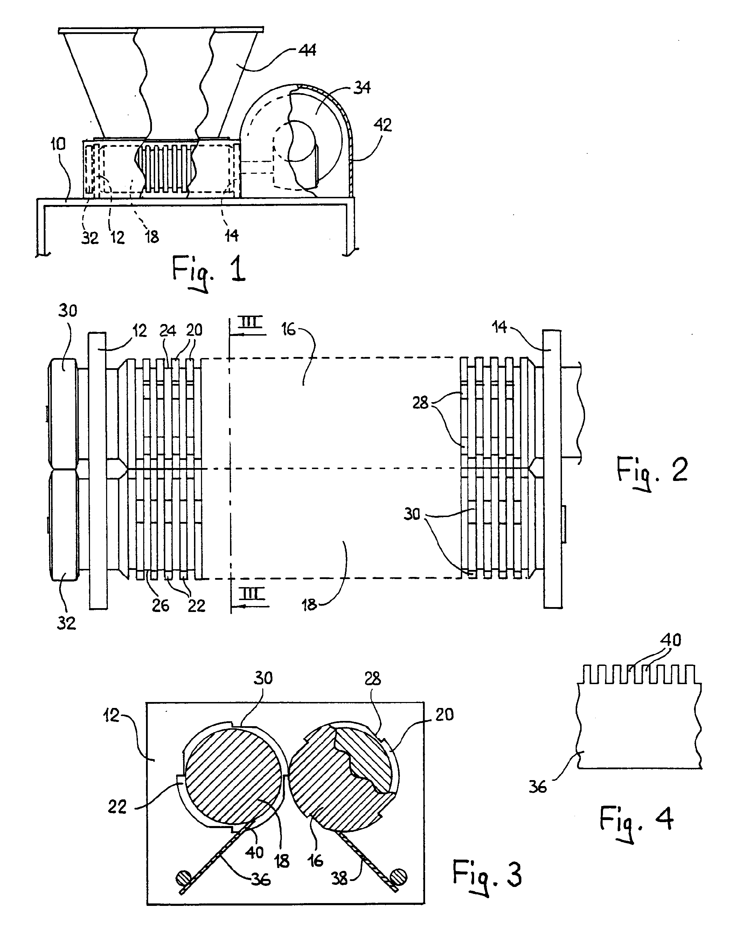

The distance between the axes of the rollers is substantially equal to the sum of the roller radii at the tips of the ribs, as shown on Fig. 2, and the ribs of one roller are longitudinally shifted of a distance equal to the width of one rib with respect to the ribs of the other roller, again as shown on Fig. 2. However, depending on the product which is to be ground, the two rollers might be more distant, or, on the other hand, they maight be slightly interfering.

In order to have a firmer grip of the product in the roller nip (as further explained below), each rib has on its periphery several notches 28, 30, each being defined by one side substantially radial to the rib, and another side substantially tangential to it. For ease of machining, notches 28, 30 are preferably longitudinally aligned on each roller, but the two rollers are arranged so that notches 28, for best effectiveness, are angularly offset with respect to notches 30.

At their ends supported in plate 12, the two rollers 16, 18 carry respective, identical gears 31, 32, engaging with each other. At the opposite end, roller 16 is driven by an electric motor 34, with reduction gear, mounted on plate 14. The two rollers 16, 18 therefore rotate in opposite directions with equal speeds.

On plates 12, 14 are further rigidly mounted two combs or reeds 36, 38, having teeth such as 40 (Fig. 4), which are obliquely inserted in the grooves of the rollers, in order to act as scrapers of the ground product which should cling to the bottom and the walls of the grooves.

The set of plates 12, 14 and the rollers carried on them as well as motor 14 is covered by a cowling 42 of metal sheet, upon which is further carried a hopper 44 overhanging the nip of the rollers.

The nuts or other product to be ground are poured into hopper 44 and fall in the nip of rollers 16, 18, where they are gripped by notches 28, 30 and are drawn into the grip of the rollers. Here the nuts are crushed by the sharp corners of ribs 20, 22 and fall below through the grooves, which thus act as a sieve. The action of rollers is gradual and smooth, and does not squeeze the nuts, nor does it subject them to prolonged shock, which would overheat the product. Therefore the organoleptic properties of the product are not altered. More particularly, no liquid or oleous phase are separated.

The grip of the product into the roller nip is assured by the asperities offered by notches 28, 30. The scraping by the combs ensures that grooves 24, 26 are always clear, without any chance of stoppage due to clogging of product residues.

A preferred embodiment of the invention has been disclosed, though it is understood that such preferred embodiment is capable of changes and modifications, obvious for a person skilled in the art, within the scope as defined by the claims. In particular, one of the rollers could be mounted on plates 12, 14 so that its distance from the other roller is adjustable.

## Claims

1. A nut grinding machine, in particular for hazelnuts, almonds and chocolate in bars, comprising two side-by-side, counter-rotating cylindrical rollers (16, 18) with parallel axes, having pluralities of annular ribs (20, 22), with sharp edges, uniformly arranged on their respective lateral surfaces so that between adjacent ribs corresponding grooves (24, 26) are defined, whose width is equal to the width of the ribs, the ribs of each roller being in front of the grooves of the other roller, and the distance between the axes of the rollers being substantially equal to the sum of the roller radii at the ribs, characterized in that
each rib has notches (28, 30) at intervals along its periphery, the notches are aligned on each roller and the two rollers are arranged so that the notches (28) on one roller (16) are angularly offset with respect to the notches (30) on the other roller (18),
each of said notches (28, 30) has one side substantially lying radially to the rib and another side substantially lying tangentially, the side lying tangentially being forward with respect to the side lying radially in the direction of rotation of the rollers.

2. The grinding machine of claim 1, characterized in that the width of each rib is substantially equal to its radial dimension.

3. The grinding machine of one of claims 1 or 2, characterized in that it comprises two extractor combs (36, 38) having teeth (40) which are obliquely inserted in the grooves of the respective rollers, counter to their directions of rotation, on the product outlet side.

4. The grinding machine of one of claims 1 to 3, characterized in that the two rollers have at one end respective gears (30, 32) of equal diameter, engaging with each other, and one of the rollers is driven by electrical motor means (34).

## Patentansprüche

1. Nußmühle, insb. für Haselnüsse, Mandeln und Riegelschokolade, mit zwei gegenläufigen, zylindrischen, nebeneinander gesetzten Walzen (16, 18) mit parallelen Achsen, die mehrere ringförmigen, scharfkantigen, auf ihren Seitenflächen gleichmäßig angeordneten Rippen (20, 22) aufweisen, wobei zwischen naheliegenden Rippen entsprechende Nuten (24, 26) geformt sind, deren Breite der Rippenbreite gleich ist, und wobei die Rippen jeder Walze den Nuten der anderen Walze gegenüberliegen und der Achsenabstand der Walzen der Summe der Walzenradii auf der Rippen wesentlich gleich ist, dadurch gekennzeichnet, daß
jede Rippe Einschnitte (28, 30) in Abständen auf ihrem Umfang aufweist, die Einschnitte auf jeder Walze fluchtgerecht sind, und die beiden Walzen so angeordnet sind, daß die Einschnitte (28) auf der einen Walze (16) in bezug auf den Einschnitten (30) auf der anderen Walze (18) winklig versetzt sind,
jeder der obengenannten Einschnitte (28, 30) eine Seite hat, die der Rippe wesentlich radial liegt und eine andere Seite hat, die wesentlich tangential liegt, wobei die tangentialliegende Seite in bezug auf die radialliegende Seite im Drehsinn nach vorne ist.

2. Nußmühle nach Anspruch 1, dadurch gekennzeichnet, daß die Breite jeder Rippe ihrem Radialmaß wesentlich gleich ist.

3. Nußmühle nach einem der Ansprüche 1 oder 2, dadurch gekennzeichnet, daß sie zwei Aushebekämme (36, 38) umfaßt, die in die Nuten der entsprechenden Walzen, gegen deren Drehsinn und auf der Produktauslaufseite, schräg eindrigenden Zähne (40) aufweisen.

4. Nußmühle nach einem der Ansprüche 1 bis 3, dadurch gekennzeichnet, daß die beiden Walzen an einem Ende entsprechende, ineinandergreifende Zahnräder (30, 32) von gleichem Durchmesser aufweisen, und daß eine der Walzen von Elektromotormitteln (34) angetrieben ist.

## Revendications

1. Appareil pour triturer des noix, en particulier noisettes, amandes et chocolat en barres, comprenant deux rouleaux cylindriques contrarotatifs placés côte à côte (16, 18), ayant leur axes parallèles, ayant des pluralités de saillies anulaires (20, 22) avec arêtes vives, qui sont disposées uniformément sur leur respectives surfaces latérales de façon qu'entre saillies adjacentes soient formées des cannelures correspondantes (24, 26) dont la largeur est égale à la largeur des saillies, les saillies de chaque rouleau étant en face des cannelures de l'autre rouleau et la distance entre les axes des rouleaux étant sensiblement égale à la somme des rayons des rouleaux sur les saillies, caractérisé en ce que
chaque saillie a des encoches (28, 30) écartées sur son pourtour et alignées sur chaque rouleau et les deux rouleaux sont disposés de façon que les encoches (28) sur un des rouleaux (16) soient décalées en angle par rapport aux encoches (30) de l'autre rouleau (18)
un des côtés de chacune desdites encoches (28, 30) s'étend en direction sensiblement radiale à la saillie et l'autre côté s'étend en direction sensiblement tangentielle, le côté s'étendant en direction tangentielle étant en avant par rapport au côté s'étendant en direction radiale dans le sens de rotation des rouleaux.

2. Appareil pour triturer selon la revendication 1, caractérisé en ce que la largeur de chaque saillie est sensiblement égale à sa dimension radiale.

3. Appareil pour triturer selon une des revendications 1 ou 2, caractérisé en ce qu'il comprend deux peignes extracteurs (36, 38) ayant des dents (40) qui sont insérées obliquement dans les cannelures des rouleaux respectifs, contre leur sens de rotation, sur le côté de sortie du produit.

4. Appareil pour triturer selon une des revendications 1 à 3, caractérisé en ce que à une de leur extrémités les deux rouleaux ont des respectifs pignons (30, 32) du même diamètre, qui s'engagent entre eux, et un des rouleaux est commandé par des moyens moteurs électriques.
